Europäisches Patentamt

European Patent Office

Office européen des brevets

(19)

(11) **EP 0 914 860 A2**

(12) **EUROPÄISCHE PATENTANMELDUNG**

(43) Veröffentlichungstag:
**12.05.1999 Patentblatt 1999/19**

(51) Int. Cl.⁶: **B01F 5/06**

(21) Anmeldenummer: **98119656.1**

(22) Anmeldetag: **17.10.1998**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **07.11.1997 DE 19749315**

(71) Anmelder: **EMTEC Magnetics GmbH
67059 Ludwigshafen (DE)**

(72) Erfinder:
• **Schünemann, Axel
77652 Offenburg (DE)**
• **Zettler, Hans-Dieter
67269 Grünstadt (DE)**
• **Nagel, Peter
77731 Willstätt (DE)**

(54) **Verfahren zur Herstellung einer Magnetdispersion für Magnetaufzeichnungsträger und damit hergestellter Magnetaufzeichnungsträger**

(57) Ein Verfahren zur Herstellung hochwertiger Magnetdispersionen mit einer $H_c$ > 120 kA/m, einer Magnetremanenz Mr/Mm ≥ 0,9 und einem Richtfaktor um 2,7 erzielt mit einer selbstreinigenden Ein-Wellen-Schaufel-Knetvorrichtung sehr günstige Magnetwerte der Magnetbeschichtungen und hervorragende Bandcharakteristiken, wenn wenigstens folgende Merkmale erfüllt sind:

a) das radiale Schergefälle im Spalt zwischen Schaufelumfang und Gehäusewand liegt im Bereich von etwa 150 1/sec bis etwa 1600 1/s, insbesondere von etwa 500 1/sec bis etwa 1400 1/sec

b) die Umfanggeschwindigkeit der Knetschaufel liegt im Bereich von etwa 20 cm/sec bis etwa 80 cm/sec, insbesondere von etwa 35 cm/sec bis etwa 60 cm/sec.

Verwendbar ist die hergestellte Magnetdispersion insbesondere für die Daten- und Videoaufzeichnungsträger mit hohen Aufzeichnungs- und Speicher-Raten.

# FIG.1

EP 0 914 860 A2

**Beschreibung**

Die Erfindung betrifft ein Verfahren zur Herstellung einer Magnetdispersion für eine Magnetbeschichtung mit Magnetpartikeln mit einer Koerzitivfeldstärke von über 120 kA/m, einer relativen Magnetremanenz Mr/Mm von mindestens etwa 0,9 und einem Richtfaktor von wenigstens 2,7 mittels einer Einwellen-Schaufelknetvorrichtung, wobei sich die Welle in einem Gehäuse mit einer Gehäusewand dreht und gleichzeitig in Axialrichtung oszilliert zum Kneten einer Mischung von magnetischen Partikeln in einem thermoplastischen Bindemittel und einem Lösungsmittel sowie die Verwendung einer für das Verfahren geeigneten Vorrichtung und einem nach dem Verfahren hergestellten Magnetaufzeichnungsträger.

Mit der DE-A 3 943 340 ist ein Verfahren zur Herstellung von magnetischen Beschichtungszusammensetzungen bekannt, wobei mittels einer einzigen stufenlosen Zwei-Wellen-Flügel-Knetvorrichtung eine Magnetdispersion mit einem Feststoffgehalt von 65 bis 95 % in den Knetzonen geknetet wird und wobei die Spaltbreiten im Verdünnungsknetbereich kleiner sind als in den Knetzonen. Damit tritt zwischen der Knetzone und dem Verdünnungsbereich ein Spaltsprung (eine Spaltbreitenänderung) auf. Die Umfanggeschwindigkeit der Flügel bzw. Schaufeln soll nach diesem bekannten Verfahren innerhalb des Bereichs von 1 cm/s bis 50 cm/s und vorzugsweise im Bereich von 2 cm/s oder bis 20 cm/s liegen. Damit wurden im Magnetband relative Magnetremanenzen von 0,84 bis 0,89 erreicht bei Koerzitivfeldstärken von 644 bis 650 Oerstedt, entsprechend 51,2 bis 51,7 kA/m, was für Aufzeichungsträger mit hoher Speicherdichte völlig unzureichend ist.

Beim Verfahren der DE-A-39 43 340 muß für jedes Produkt eine optimale Spaltbreite in der Knetzone durch Versuche ermittelt werden, da sonst Einbußen in der Durchsatzmenge auftreten. Durch unvermeidlichen Verschleiß wird man außerdem immer aus dem optimalen Betriebsbereich herausfallen.

Der Erfindung lag somit die Aufgabe zugrunde, ein verbessertes Verfahren bereitzustellen, mit dem wirtschaftlich größere Mengen von Magnetdispersionen herstellbar sind, die zu Magnetbeschichtungen mit besseren Magnetwerten und -eigenschaften führen.

Die Aufgabe wird mit den Merkmalen des Anspruchs 1 gelöst, wenn

a) das radiale Schergefälle im Spalt zwischen der Spitze der Knetschaufel und der Gehäusewand im Bereich von etwa 150 1/sec bis etwa 1600 1/sec, insbesondere von etwa 500 1/sec bis etwa 1400 1/sec liegt und
b) die Umfangsgeschwindigkeit der Knetschaufel im Bereich von etwa 20 cm/sec bis etwa 80 cm/sec, insbesondere von etwa 35 cm/sec bis etwa 60 cm/sec liegt.

Letztere befindet sich jedenfalls außerhalb des Vorzugsbereichs der DE-A-3 943 340 und auch teilweise weit über dem dort angegebenen Maximalwert von 50 cm/sec.

In der Praxis erbrachten Versuche mit einem Doppelschneckenextruder gemäß DE-A-3 943 340 bei einem höheren Schergefälle keine besseren Magnetwerte im fertigen Magnetband.

Erst als bei der Einwellen-Schaufelknetvorrichtung das weitere Merkmal, das radiale Schergefälle zwischen Schaufelumfang und Gehäusewand in den Bereich von etwa 150 1/sec bis etwa 1600 1/sec, insbesondere von etwa 500 1/sec bis etwa 1400 1/sec gelegt wurde, ergaben sich besonders gute Magnetwerte und Elavwerte in der fertigen Beschichtung bei deutlich verbesserter Wirtschaftlichkeit des Verfahrens.

Mit der für das erfindungsgemäße Verfahren verwendeten Einwellen-Schaufelknetvorrichtung ist es möglich, ohne Modifikation der Knetzone alle Produkte zu kneten. Es entsteht kein zusätzlicher Versuchsaufwand beim Herausfinden von optimalen Spalten und Längen der Knetzone. Die Entwicklungszeiten eines gekneteten Produktes werden verkürzt.

Gegenüber der Verwendung von 2-Wellen-Flügelknetern ist die Verwendung von Einwellen-Flügel- oder Schaufelknetern für das Kneten von Magnetpasten überraschend günstig, da bei ersteren im Zwickelbereich zweier Flügelpaare zu hohe Temperaturen auftreten, insbesondere bei einer Erhöhung der Flügel-Umfangsgeschwindigkeiten. Die hohen Temperaturen führen zu Konzentrationsunterschieden und Entmischungen in der Knetpaste und gegebenenfalls zu einer Agglomeration unter Druck führen können, was sich wiederum in einer ungleichmäßigen Magnetpartikel-Verteilung in der Dispersion und damit in schlechten Magnetwerten im fertigen Magnetaufzeichnungsträger niederschlägt.

Es hat sich als vorteilhaft herausgestellt, wenn die Scherbeanspruchungszeit unter einer Knetschaufel zwischen etwa 1/100 sec bis etwa 5/1000 sec liegt, was durch einen hohen Volumenstrom realisierbar ist und zu einer großen Produktivität führt. Der Knetfaktor liegt zweckmäßig im Bereich von etwa 2 bis etwa 80, insbesondere im Bereich von etwa 10 bis etwa 80. Der Knetfaktor ist abhängig vom Schervolumen in der Knetzone, dem Volumenstrom, der Verweilzeit und der Drehzahl (wird noch nachfolgend erläutert) und stellt damit einen Kennwert für den Mengendurchsatz der verfahrensmäßig benutzten Vorrichtung dar.

Der Scherbeanspruchungsraum, d.h. das Volumen über die Länge der Knetzone der Vorrichtung soll erfindungsgemäß einen hohen Füllungsgrad nahe 100 %, insbesondere zwischen etwa 80 % und etwa 100 % aufweisen.

Damit wird wiederum einem großen Produktdurchsatz Rechnung getragen bei ausgezeichneten Magnetwerten der produzierten Magnetdispersion.

Es hat sich weiterhin als günstig herausgestellt, wenn das Verhältnis des radialen zum axialen Schergefälle kleiner als 3,0 ist und insbesondere zwischen etwa 1,5 und 2,1 liegt.

Ferner ist es auch vorteilhaft, wenn das Verhältnis der axialen zur radialen Scherfläche zwischen etwa 2 und 4 liegt.

Diese Verhältnisse wirken sich erfahrungsmäßig günstig als Magnetwertverbesserungen aus.

Auch die Längen der einzelnen Knetzonen in der Vorrichtung spielen verfahrensmäßig eine Rolle. Es hat sich als günstig herausgestellt, wenn die Länge der Knetzone, wenigstens dem achtfachen Durchmesser der Knetschaufeln entspricht.

Es ist auch vorteilhaft, wenn der Spalt zwischen der Spitze der Knetschaufel und der nächstliegenden Gehäusewand eine Breite von etwa 0,007 und etwa 0,03 des äußeren Knet-Schaufeldurchmessers aufweist.

Als erfindungsgemäß sehr vorteilhaft wird die Verwendung einer Einwellen-Schaufelknetvorrichtung mit einem Gehäuse, in dem sich die Schaufelwelle dreht und zwischen Schaufelumfang und Gehäusewandung sowie in den Axialspalten Scherbeanspruchungen ausübt und in dem die Schaufelwelle sich in Axialrichtung oszillierend bewegt, angesehen, in der

a) das radiale Schergefälle im Spalt zwischen Schaufelumfang und Gehäusewand im Bereich von etwa 150 1/sec bis etwa 1600 1/s, insbesondere von etwa 500 1/sec bis etwa 1400 1/sec, liegt und

b) die Umfanggeschwindigkeit der Knetschaufel im Bereich von etwa 20 cm/sec bis etwa 80 cm/sec, insbesondere von etwa 35 cm/sec bis etwa 60 cm/sec

liegt.

Damit werden die speziellen Anforderungen an die Herstellung von Magnetdispersionen aus Metallpigmenten mit relativ hoher Koerzitivfeldstärke und hoher relativer magnetischer Remanenz unter wirtschaftlich wesentlich günstigeren Bedingungen als mit den bekannten Doppelflügelknetern erfüllt, bei besseren Bandcharakteristiken der aus solchen Magnetdispersionen hergestellten Magnetbänder für den Daten- und Videosignal-Aufzeichnungsbereich mit hohen und sehr hohen Aufzeichungsdichten.

Ein mit einer Magnetbeschichtung nach den erfindungsgemäßen Verfahrensmerkmalen hergestellter Metallpigment-Magnetaufzeichnungsträger, gekennzeichnet durch eine Magnetbeschichtung mit einer Koerzitivfeldstärke von ≥ etwa 130 KA/m, einer relativen Magnetremanenz Mr/Mm von etwa 0,9 bis 0,92, einem Richtfaktor im Bereich von etwa 2,7 und nach einer Kalander-Satinage bei 70°C und 2350 N mit einer Trägersignal/Rauschsignal-Verhältnis C/N Abweichung von >-2dB, eine 3,5-MHz-Signal Wiedergabepegel-Abweichung von +1,0 bis 1,7dB als Kennwert für den Zerteilerfolg des Knetverfahrens und eine 35,5 MHz-Signal Wiedergabepegel-Abweichung von >-2dB als Kennwert für die Oberflächengüte des Magnetaufzeichnungs trägers, wobei die Abweichungs -Meßwerte [db] jeweils bezogen sind auf das Metallpigment-Referenz-Magnetband C1A-DB der Sony Corporation, besitzt überraschend gute Aufzeichnungs- und Wiedergabeeigenschaften.

Die Erfindung wird anhand eines schematisch in der Zeichnung dargestellten Ausführungsbeispieles nachfolgend beschrieben.

In der Zeichnung ist dargestellt in

Figur 1      ein Blockschema für eine Magnet-Aufzeichnungsträger-Herstellung
Figur 2      ein Ein-wellen-Schaufelkneter in schematischer Längsansicht mit verschiedenen Knetzonen
Figur 3      eine im Maßstab verkleinerte Draufsicht der Wellenform im Gehäuse des Schaufelkneters nach Figur 2
Figur 4      ein Diagramm: Relative Remanenz in Abhängigkeit vom Energie-Eintrag beim Kneten.

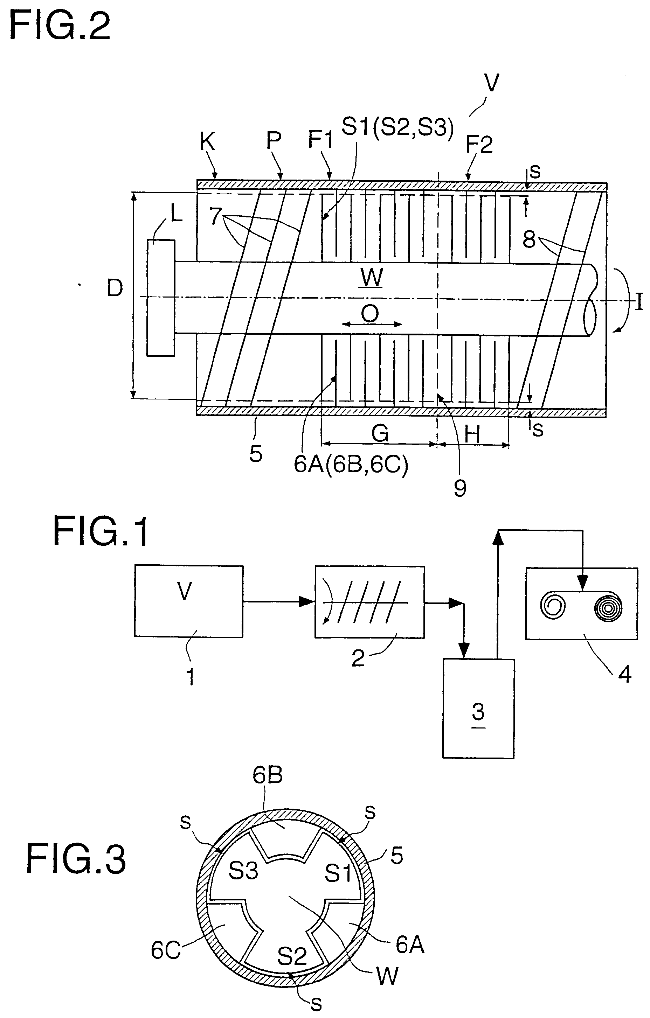

Figur 1 zeigt schematisch die Verfahrensschritte Kneten (Block 1), Dispergieren (Block 2), Filtrieren (Block 3) und Beschichten (Block 4).

Der Block 1 symbolisiert eine Einwellen-Schaufelknetvorrichtung, die in Figur 2 näher beschrieben wird.

In Figur 2 wird beim Pfeil "P" ein Metallpigment oder eine Pigmentmischung aus verschiedenen Feststoffen wie Ruß, feste Bindemittelkomponenten, Aluminiumoxid und Metallpigment eingefüllt. Der oder die Feststoffe werden von Förderelementen 7 in Richtung der Knetzone G transportiert und beim Pfeil "F1" mit dem Fluid F1, einer Bindemittel-Lösung, benetzt. Dabei entsteht eine knetbare Paste, die in der sogenannten hochviskosen Knetzone G beansprucht wird. In dieser Knetzone G können ein oder mehrere Stauelemente 9 untergebracht sein. Je nach Produkt-Aufgabenstellung kann aber auch auf den Einsatz von Stauelementen verzichtet werden.

An der mit dem Pfeil "F2" gekennzeichneten Stelle wird die Knetpaste verdünnt. Das Fluid F2 kann entweder nur Lösemittel sein oder aber auch alle für die Weiterverarbeitung in der Rührwerkskugelmühle benötigten Zuschlagstoffe enthalten. Das Fluid F2 wird in der niedrigviskosen Knetzone H eingearbeitet und von Förderelementen 8 aus der Maschine transportiert. Je nach Produkt-Aufgabenstellung kann aber auch auf den Einsatz der Förderelemente 8 verzichtet werden und die Knetzone H kann auch Stauelemente 9 enthalten.

Die Weiterverarbeitung erfolgt mit Rührwerkskugelmühlen (Figur 1, Block 2). Nach einem Auflackschritt, der noch in der Rührwerkskugelmühle vorgenommen werden kann, wird die Magnetdispersion filtriert (Figur 1, Block 3) und wird auf einer Bandbeschichtungseinrichtung (Figur 1, Block 4) beschichtet.

Eine Produktions-Beschichtungsmaschine benötigt zur Herstellung von Magnetaufzeichnungsträgern relativ große Mengen von Magnetdispersion, so daß deren Herstellung in größerer Menge und kurzer Zeit eine wichtige Aufgabe dieser Erfindung ist.

Es wurden daher Versuchsreihen zur Herstellung optimaler Magnetbänder für die Video-, Daten- und Audio-Aufzeichnung durchgeführt, die im folgenden beschrieben werden sollen.

In der Tabelle 1 werden die Versuchsergebnisse verschiedener Herstellungsverfahren von Magnetdispersionen (Versuche A - E) zusammengestellt.

Nach dem Kneten der Magnetdispersion wurden folgende Schritte zur Herstellung einer Magnetschicht vorgenommen.

Dispergierung in einer Rührwerkskugelmühle unter identischen Bedingungen. Beschichtung auf einer identischen mit Elektro -Ausrichtmagneten ausgestatteten Beschichtungsmaschine. Herstellen einer Magnetschicht mit Schichtdicken von 3,1 $\mu$m mittels Kalandrierens bei Temperatur von 70°C und unter Liniendruck von 2350 N.

Es wurde dieselbe Rezeptur verwendet, in der Knetphase bestehend jeweils aus 100 Teilen Metallpigment, ca. 15 Teilen Harz mit dispergieraktiven Gruppen, ca. 5 Teilen Gleitmittel und ca. 50 Teilen Lösemittel, wobei der Feststoffgehalt in der Knetzone ca. 74 % betrug, wobei der Metallpigmentgehalt bei 65 Gew.-% lag, um möglichst vergleichbare Verhältnisse und Magnetbänder desselben Typs zu erhalten.

An den fertigen Magnetbändern wurden die Elav-Werte digital, d.h. im Vergleich zum Metallpigment-Referenzband C1A-DB der Sony Corporation gemessen und standen somit zum Vergleich zur Verfügung.

Tabelle 1

| Versuch | A | B | C | D | E |
|---|---|---|---|---|---|
| Pigmentmenge | | 6 kg | 6 kg/h | 12 kg/h | 8 kg/h |
| Volumenstrom | | 4 l in 2,5 h | 4 l/h | 8 l/h | 5,25 l/h |
| Drehzahl | | 20/40 Upm | 50 Upm | 200 Upm | 155 Upm |
| Umfangsgeschw. | | 8,5/17cm/s | 10 cm/s | 48 cm/s | 37 cm/s |
| rad. Schergefälle | | 167/335 1/s | 525 1/s | 1070 1/s | 830 1/s |
| Verweilzeit | | 374 s | 210 s | 119 s | 234 s |
| Schergefälle x VZ | | 125 290 | 110 250 | 127 330 | 194 200 |
| Knetfaktor | | 2,1 | 1,8 | 3,6 | 10,8 |
| | | | | | |
| **Mühle** | 5 l RWK | 5 l RWK | 5 l RWK | 5 l RWK | 5 l RWK |
| Glanz bei 60° | 118 | 142 | 143 | 143 | 148 |
| **Beschichtung** | E 11 | E 11 | E 11 | E 11 | E 11 |
| Hc [kA/m] | 130,3 | 131,4 | 131,1 | 131,0 | 130,7 |
| Mm [mT] | 242 | 365 | 356 | 339 | 335 |
| Mr [mT] | 208 | 325 | 321 | 306 | 307 |
| Mr/Mm | 0,859 | 0,890 | 0,901 | 0,902 | 0,916 |
| RF | 2,3 | 2,9 | 2,9 | 2,8 | 3,0 |
| **ELAV-Digital** | | | | | |
| C7N | -2,4 | -2,6 | -3,1 | -1,4 | -1,3 |
| 3,5 MHz | -1 | -0,5 | +1,5 | +1,0 | +1,7 |
| 35,5 MHz | -3,2 | -3,7 | -3,8 | -1,4 | -1,3 |

3,5 MHz: Pegel zeigt den Zerteilerfolg beim Kneten
35,5 MHz: Pegel erlaubt Rückschlüsse auf die Oberflächengüte
Versuch A Eine Standard-Dispersion wurde ohne Zuhilfenahme einer Knetvorrichtung hergestellt und direkt in die Rührwerks-Kugelmühle eingegeben
Versuch B Zur Knetung wurde ein sogenannter Trog- oder Schub-Kneter (Batch-Kneter) benutzt, der aus zwei relativ schmalen, gegenläufig rotierenden Flügeln in einem trogartigen Behälter besteht.
Versuch C Zur Knetung wurde ein Doppelwellen-Kneter, auch als gleichsinnig drehende Doppelschneckenmaschine bezeichnet, verwendet.
Versuche D und E Zur Knetung wurde erfindungsgemäß eine oszillierende Einwellen-Schaufelknetvorrichtung, auch als "Einschneckenmaschine" bezeichnet, verwendet.

Beim Trogkneter (B) werden die Pigmentagglomerate nur in dem Spalt zwischen der Gehäusewand und der der Gehäusewand zugewandten Schaufelfläche zerteilt. Bei dem Doppelwellen- und Einwellen-Schaufelknetern (C bzw. D, E) werden die Agglomerate über den gesamten Umfang des Knetwerkzeuges, also in den Axialspalten und den Spalten zwischen Schaufelspitze und Gehäusewand, zerteilt.

Bei der Einwellen-Schaufelknetvorrichtung (D, E) befindet sich der Scherspalt "s" zwischen der Gehäusewand und den Spitzen der senkrecht auf einer rotierenden Welle W angebrachten Knetschaufeln S1-S3. Das rotierende Werkzeug ist eine dreifach unterbrochene Schneckenwelle, der einzigen Welle W, so daß drei Flügel oder Schaufeln S1-S3 entstehen. Diese Schaufeln umfahren die an der Gehäusewand 5 befindlichen stationären Stifte 6A-6C in einer oszillierenden Bewegung.

Beim Versuch A werden Magnet- und Elav-Werte erzielt, die man beim eingesetzten Metallpigment ohne Knetung erreichen kann, was die Untergrenze des technisch Möglichen darstellt.

Beim Versuch B wurden trotz relativ geringer Wellen-Drehzahlen von 20/40 Upm und geringem radialen Schergefälle von 167/335 1/s gute Magnetwerte, aber schlechte Elav-Werte am Band erhalten.

Die Ergebnisse des Versuchs B sind mit denen des Versuchs C vergleichbar, jedoch ist bei letzterem die Wellen-Drehzahl mit 50 Upm größer, das Schergefälle mit 525 1/s erheblich größer, die Magnetwerte sind etwa vergleichbar und die Elav-Werte sind beim Versuch C teilweise besser. Als Pigmentmenge wurden bei den Versuchen A-C jeweils 6 kg eingesetzt.

Versuche D und E: Die Ergebnisse des Ein-Wellen-Kneters K, der in Figur 2 als Beispiel dargestellten Ausführung sind herausragend bei den folgenden Werten:

1) Die Pigmentmenge konnte bei D verdoppelt, bei E um etwa ein Drittel vergrößert werden.
2) Die Umfangsgeschwindigkeit betrug mit 200 Upm (D) und 155 Upm (E), das Vierfache bzw. das Dreifache des Versuchs C.
3) Das Schergefälle lag mit 1070 1/s (D) um ca. 100 % höher als beim Versuch C. Bei E betrug die Erhöhung 58 % gegenüber C.
4) Die Magnetwerte waren deutlich besser als beim Versuch C.
5) Die Elavwerte (Elav-Digital-Daten) waren deutlich besser als beim Band aus dem Versuch C.

Die Einwellenvorrichtung V wird anhand von Figuren 2 und 3 als vorteilhaftes Ausführungsbeispiel für die erfindungsgemäße Verwendung als Herstellungsvorrichtung für eine Magnetdispersion hoher Güte nachfolgend beschrieben. Die Einwellenvorrichtung ist "selbstreinigend" in der hauptsächlichen Knetzone G, und in der Verdünnungszone H, nicht jedoch in den anderen Bereichen. Dennoch werden Einwellenvorrichtungen dieser Art als "selbstreinigend" bezeichnet.

Die Welle W ist mit Einzugselementen 7 ausgebildet, in deren Anfangs-Bereich auch die Feststoff- bzw. Pigmentzugabe P erfolgt. In Achsrichtung der Welle W folgen Knetelemente S1-3, die auch in Figur 3 als Flügel oder Schaufeln S1-S3 sichtbar sind. Es sind auch die gehäuseseitigen Knetstifte oder -zähne 6A-C, in Figur 3 in Draufsicht dargestellt. Die Welle W ist einseitig in einem Lager L geführt. Die Welle W wird mittels einer speziellen Getriebekonstruktion (nicht dargestellt) gedreht (Pfeil I) und gleichzeitig oszillierend (Doppelpfeil O) hin- und herbewegt.

Auf den Anfangs-Bereich, in dem die Feststoff -Förderung stattfindet, folgt hinter der Fluidzugabeöffnung F1, wobei das Fluid eine Bindemittellösung ist, die hochviskose Knetzone G, in der die Pigment-Bindemittel-Mischung hohen Scherkräften unterworfen wird. An die hochviskose Knetzone G schließt sich die niedrigviskose Mischzone H an, welche die Fluidzugabeöffnung F2, wo die übrigen Bandschicht-Rezepturkonponenten und Lösemittel eingefüllt werden, enthält.

Die Strichlinie 9 symbolisiert ein Stauelement, das den Füllgrad der einzigen Knetzone G beeinflußt.

Der äußere Durchmesser der Flügel S1-S3 ist mit D bezeichnet. Die Knetstifte 6 sind am Gehäuse K so angeordnet, daß bei Bewegung der Welle W deren Flügel S die Knetstifte 6 oszillierend umfahren.

Die Knetfunktion der Knetmaschine für Magnetdispersionen besteht im Desagglomerieren und Benetzen der Pigmente als auch in der wichtigen Eigenschaft, die nadelförmigen Magnetpigmente homogen in der Bindemittelmatrix zu verteilen, wobei auch die schonende Behandlung des Bindemittels selbst gewährleistet sein muß. Um diese Funktionen zu erreichen, dürfen die auftretenden Drücke nicht zu hoch werden, d.h. sie müssen gleichmäßig auftreten und dürfen nicht extrem hoch werden, wie sie z.B. im Zwickelbereich der Doppelschnecken-Maschinen vorhanden sind, da bei zu hohen Drücken Konzentrationsunterschiede auf treten. Das Schergefälle ist bei Doppelschneckenmaschinen (Versuch C) bei gleicher Wellendrehzahl um den Faktor 2-3 größer als bei der Einwellenmaschine. Eine Erhöhung der Wellendrehzahl bet Doppelschneckenmaschinen ergab hohe Knetpastentemperaturen und Konzentrationsunterschiede, die zu einer Schädigung des Polymermaterials und des Pigments führten. Konzentrationsunterschiede wirken sich praktisch als Verarmung der Knetpaste an Bindemittel aus, wodurch die Bildung von Agglomeraten des Pigments gefördert wird. Außerdem ergaben sich bei gleichem Scherspalt schlechtere Magnetwerte (relative Remanenzen Mr/Mm = 0,901). Eine Erhöhung des Füllgrades der Knetstrecke (Füllgrad $\triangleq$ tatsächlich genutztes Knetvolumen zum maximal vorhandenen Knetvolumen) über 60 % führte bei der Doppelschneckenmaschine zu einer wesentlichen Verschlechterung der Banddaten, was bedeutet, daß eine Erhöhung des Durchsatzes durch Steigerung des Füllgrades über 60 % nicht möglich ist.

Die Verwendung der Einwellenmaschine hat erfindungsgemäß demgegenüber den Vorteil, daß der Ver- und Zerteileffekt gleichmäßiger ist, dadurch, daß das Schergefälle sich für die Herstellung von Magnetdispersionen im Bereich von etwa 150 1/sec bis etwa 1600 1/sec, insbesondere von etwa 500 1/sec bis etwa 1400 1/sec, überraschend gut eignet, wenn außerdem diese Einwellenmaschine eine Umfangsgeschwindigkeit der Knetschaufeln zwischen etwa 20 cm/sec bis etwa 80 cm/sec, insbesondere von etwa 35 cm/sec bis etwa 60 cm/sec aufweist. Bei der Berechnung wurde der Außendurchmesser der Knetschaufeln und eine resultierende Spaltbreite benutzt. Es ergab sich außerdem, daß das radiale Schergefälle etwa das Doppelte des axialen Schergefälles (das auf den mittleren Knetschaufeldurchmesser bezogen wurde) beträgt.

Im folgenden werden die Werte in den Versuchen D und E verglichen:

Versuch D:

Schergefälle liegt bei 1070 1/sec - gegenüber 525 1/sec (Versuch C)
Umfangsgeschwindigkeit 48 cm/sec - gegenüber 10,5 cm/sec.

Versuch E:

Schergefälle liegt bei 830 1/sec
Umfangsgeschwindigkeit 37 cm/sec

Dadurch wird erreicht, daß durch ein hohes Schergefälle und eine ausreichende Verweilzeit gute Magnetwerte Mr/Mm und herausragende Bandeigenschaftswerte erzielt werden können.

Wie oben ausgeführt, spielt auch der Knetfaktor eine Rolle für die späteren Bandeigenschaften.

Die Gehäuseoberfläche und die Schaufeloberfläche ergeben mit dem Scherspalt ein Volumen, in dem die Paste pro Wellenumdrehung geschert wird.

Multipliziert mit den Wellenumdrehungen während der Verweilzeit der Paste in der Knetzone ergibt dies das zur Verfügung stehende Schervolumen. Es ergibt sich somit als

$$\text{Knetfaktor} = \frac{\text{Schervolumen x Drehzahl x Verweilzeit}}{\text{Volumenstrom}}$$

Die Knetfaktoren liegen mit 3,6 (D) und 10,8 (E) weit über den Knetfaktoren bei (c) 1,8 und (B) 2,1, so daß auch die Magnet- und Bandwerte (Elav-Digital) vgl. Tabelle 1 bei D und E erheblich besser sind als bei A-C.

Ein Vergleich der Einzelwerte der Versuche B und C mit den Versuchen D und E nach der Erfindung ergibt die folgenden Unterschiede:

Die Magnetwerte:

Koerzitiv-Feldstärken (Hc) liegen alle bei etwa 131 die relativen Magnetremanenzen liegen alle zwischen 0,90 und 0,91, die Richtfaktoren sind leicht unterschiedlich mit C, B 2,90, D 2,80 und E 3,0.

Die Bandwerte:

Die Bänder wurden unter identischen Bedingungen beschichtet und satiniert mittels desselben Kalanders mit Stahl/Stahl-Walzen bei 70°C und 2350 N Liniendruck, wie oben beschrieben.

| * ELAV-Daten (dB) | Versuch B | Versuch C | Versuch D | Versuch E |
|---|---|---|---|---|
| Trägersignal/Rauschsignal | -2,6 | -3,1 | -1,4 | -1,3 |
| 3,5 MHz-Pegel | -0,5 | +1,5 | +1,0 | +1,7 |
| 35,5 MHz-Pegel | -3,7 | -3,8 | -1,4 | -1,3 |

\* Elav-Daten ≙ Speichertechnische Daten

Die Meßdaten wurden auf das Metallpigment-Referenzband C1A-DB der Sony Corporation bezogen.

Der Vergleich zeigt, daß bis auf den 3,5 MHz-Pegelwert alle anderen Meßwerte des erfindungsgemäß hergestellten Magnetbandes (Versuche D und E) herausragend besser waren.

Wie die Tabelle 1 der Versuche A-E auch zeigt, wurde im erfindungsgemäßen Versuch D ein doppelt so großer Volumenstrom und im Versuch E ein 33 % größerer Volumenstrom wie in den anderen Versuchen A-C verarbeitet, was natürlich auch die entsprechend größere Produktionsmenge an Magnetdispersion ergab, womit entsprechend mehr Magnetbänder herstellbar waren.

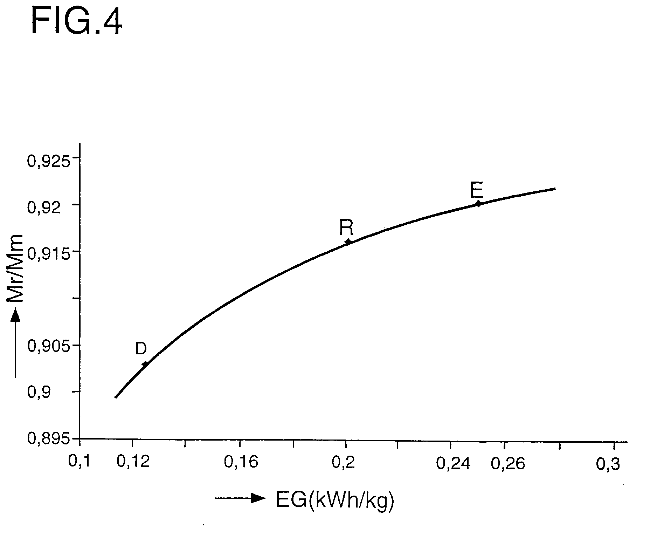

In Figur 4 ist der Energieeintrag beim Kneten der Paste in Abhängigkeit von der relativen Magnetremanenz Mr/Mm von drei erfindungsgemäß hergestellten Magnetdispersionen dargestellt, aus den Werten der Versuche D und E und eines weiteren nicht detailliert aufgeführten Versuchs R.

Aus Figur 4 ergibt sich ein spezifischer Energieeintrag EG von > 0,12 bis etwa 0,25 KWh pro kg Pigment.

Vergleichsweise liegt der spezifischen Energieeintrag einer Doppelschneckenknetmaschine bei ca. 0,1 - 0,11 KWh/pro kg Pigment.

Da der spezifische Energieeintrag eine Kenngröße für die Auf teilung der Pigment-Agglomerate ist: je größer der spezifische Energieeintrag beim Kneten einer Pigmentpaste ist, desto erfolgreicher war die Vereinzelung der Pigmentnadeln bzw. der Einzelpigmente und desto näher liegt die relative Remanenz Mr/Mm am Wert 1, dem Idealzustand, in dem es nur noch einzeln liegende Magnetpigmente gibt.

Der Wert des spezifischen Energieeintrages von > 0,12 bis etwa 0,25 liegt daher weit über dem Wert von 0,1 - 0,11 KWh/kg der bekannten Doppelschneckenmaschinen, so daß die relativen Remanenzwerte beim erfindungsgemäßen Verfahren größer und im Fall des Versuchs E sogar erheblich größer sind.

Der spezifische Energieeintrag kann erfindungsgemäß vorteilhaft zwischen etwa 0,1 und 0,3 KWh/kg liegen.

Der spezifische Energieeintrag EG kann mittels einer Drehmoment-Meßwelle oder durch Messung der elektrischen Leistungsaufnahme der Knetmaschine ermittelt werden.

Der spezifische Energieeintrag EG beim Kneten ist definiert als Momentanleistung "N" minus Leerlaufleistung "NO" in KW, dividiert durch "m" Massestrom an Pigment in kg/h. Die Einheit ist KWh/kg.

Die Erfindung betrifft ein Verfahren zur Herstellung hochwertiger Magnetdispersionen mit einer $H_c$ > 120 kA/m, einer Magnetremanenz Mr/Mm ≥ 0,9 und einem Richtfaktor um 2,7 erzielt mit einer Ein-Wellen-Schaufel-Knetvorrichtung sehr günstige Magnetwerte der Magnetbeschichtungen und hervorragende Bandcharakteristiken, wenn wenigstens folgende Merkmale erfüllt sind:

    a) das radiale Schergefälle im Spalt zwischen Schaufelumfang und Gehäusewand liegt im Bereich von etwa 150 1/sec bis etwa 1600 1/s, insbesondere von etwa 500 1/sec bis etwa 1400 1/sec
    b) die Umfangsgeschwindigkeit der Knetschaufel liegt im Bereich von etwa 20 cm/sec bis etwa 80 cm/sec, insbesondere von etwa 35 cm/sec bis etwa 60 cm/sec,

und einen damit hergestellten Magnetaufzeichnungsträger.

Verwendbar ist die hergestellte Magnetdispersion, insbesondere für die Daten- und Videoaufzeichnungsträger mit hohen Aufzeichnung- und Speicher-Raten.

**Patentansprüche**

1. Verfahren zur Herstellung einer Magnetdispersion für eine Magnetbeschichtung mit Magnetpartikeln mit einer Koerzitivfeldstärke von über 120 kA/m, einer relativen Magnetremanenz Mr/Mm von mindestens etwa 0,9 und einem Richtfaktor von wenigstens 2,7 mittels einer Einwellen-Schaufelknetvorrichtung, wobei sich die Welle (W) in einem Gehäuse mit einer Gehäusewand (K) dreht (Pfeil I) und gleichzeitig in Axialrichtung oszilliert (Pfeil O) zum Kzieten einer Mischung von magnetischen Partikeln in einem thermoplastischen Bindemittel und einem Lösungsmittel, gekennzeichnet durch die folgenden Merkmale

    a) das radiale Schergefälle im Spalt (s) zwischen der Spitze der Knetschaufel (S1-S3) und Gehäusewand (K) liegt im Bereich von etwa 150 1/sec bis etwa 1600 1/s, insbesondere von etwa 500 1/sec bis etwa 1400 1/sec
    b) die Umfanggeschwindigkeit der Knetschaufel (S1-S3) liegt im Bereich von etwa 20 cm/sec bis etwa 80 cm/sec, insbesondere von etwa 35 cm/sec bis etwa 60 cm/sec.

2. Verfahren nach Anspruch 1, dadurch gekennzeichnet, daß die Scherbeanspruchungszeit unter einer Knetschaufel (S1-S3) zwischen etwa 1/100 sec bis etwa 5/1000 sec liegt.

3. Verfahren nach Anspruch 1 oder 2, dadurch gekennzeichnet, daß der Knetfaktor im Bereich von etwa 2 bis etwa 80, insbesondere im Bereich von etwa 10 bis etwa 80, liegt.

4. Verfahren nach Anspruch 1 und einem oder mehreren der Ansprüche 2 und 3, dadurch gekennzeichnet, daß der Scherbeanspruchungsraum (G) im Gehäuse (K) der Schaufel-Knetvorrichtung einen hohen Füllungsgrad nahe 100 %, insbesondere zwischen etwa 80 und etwa 100 % aufweist.

5. Verfahren nach Anspruch 1 und einem oder mehreren der Ansprüche 2 bis 4, dadurch gekennzeichnet, daß das Verhältnis des radialen zum axialen Schergefälle kleiner als 3,0 ist und insbesondere zwischen etwa 1,5 und 2,1 liegt.

6. Verfahren nach Anspruch 1 und einem oder mehreren der Ansprüche 2 bis 5, dadurch gekennzeichnet, daß das Verhältnis der axialen zur radialen Scherfläche zwischen etwa 2 und etwa 4 liegt.

7. Verfahren nach Anspruch 1 und einem oder mehreren der Ansprüche 2 bis 6, dadurch gekennzeichnet, daß die Länge der Knetzone (G), wenigstens dem achtfachen Knetschaufeldurchmesser (D) entspricht.

8. Verfahren nach Anspruch 1 und einem oder mehreren der Ansprüche 2 bis 7, dadurch gekennzeichnet, daß der Spalt (s) zwischen der Spitze der Knetschaufel (S1-S3) und der nächstliegenden Gehäusewand eine Breite von zwischen etwa 0,007 und etwa 0,03 des Knetschaufeldurchmessers (D) aufweist.

9. Verfahren nach Anspruch 1 und einem oder mehreren der Ansprüche 2 bis 8, dadurch gekennzeichnet, daß der spezifische Energieeintrag pro kg Pigment zwischen etwa 0,1 und 0,3 KWh liegt.

10. Verwendung einer Vorrichtung für ein Verfahren nach Anspruch 1 oder einem oder mehreren der Ansprüche 2 bis 7, bestehend aus einer Einwellen-Schaufelknetvorrichtung mit einem Gehäuse, in dem sich die Schaufelwelle (W) dreht (Pfeil I) und zwischen Knetschaufelumfang (D) und Gehäusewandung (K) Scherbeanspruchungen ausübt und in dem die Knetschaufelwelle (W) sich in Axialrichtung oszillierend (Pfeil O) bewegt, dadurch gekennzeichnet, daß

a) das radiale Schergefälle im Spalt (s) zwischen der Spitze der Knetschaufel und Gehäusewand liegt im Bereich von etwa 150 1/sec bis etwa 1600 1/s, insbesondere von etwa 500 1/sec bis etwa 1400 1/sec, liegt und
b) die Umfanggeschwindigkeit der Knetschaufel (S1-S3) liegt im Bereich von etwa 20 cm/sec bis etwa 80 cm/sec, insbesondere von etwa 35 cm/sec bis etwa 60 cm/sec

liegt.

11. Magnetaufzeichungsträger mit einer Magnetbeschichtung hergestellt aus einer Metallpigment-Magnetdispersion nach dem Verfahren gemäß Anspruch 1 oder einen oder mehreren der Ansprüche 2 bis 8, gekennzeichnet durch eine Magnetbeschichtung mit einer Koerzitivfeldstärke von ≥ etwa 130 kA/m, einer relativen Magnetremanenz Mr/Mm von etwa 0,9 bis 0,92, einem Richtfaktor im Bereich von etwa 2,7 und nach einer Kalander-Satinage bei 70°C und 2350 N mit einem Trägersignal/Rauschsignal-Verhältnis C/N von >-2dB, einem 3,5 MHZ-Signal Wiedergabewert von +1,0 bis 1,7 dB als Kennwert für den Zerteilerfolg des Knetverfahrens und einem 35,5 MHZ-Signal-Wiedergabewert von >-2dB als Kennwert für die Oberflächengüte des Magnetbandes, wobei die Abweichungsmeßwerte [dB] jeweils bezogen sind auf das Metallpigment-Referenz-Magnetband C1A-DB der Sony Corporation.

## FIG.2

## FIG.1

## FIG.3

# FIG.4